**Europäisches Patentamt**

**European Patent Office**

**Office européen des brevets**

(11) Numéro de publication : **0 443 905 A1**

(12) # DEMANDE DE BREVET EUROPEEN

(21) Numéro de dépôt : **91400330.6**

(51) Int. Cl.⁵ : **B01D 53/36, C01B 17/50**

(22) Date de dépôt : **12.02.91**

(30) Priorité : **19.02.90 FR 9001960**

(43) Date de publication de la demande :
**28.08.91 Bulletin 91/35**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Chopin, Thierry**
**44, rue Augsute Poullain, Résidence Clos Liendit**
**F-93200 Saint-Denis (FR)**
Inventeur : **Hebrard, Jean-Luc**
**31 rue Dauphine**
**F-75006 Paris (FR)**
Inventeur : **Quemere, Eric**
**11 Bis rue du Martray**
**F-95240 Cormeilles en Parisis (FR)**

(74) Mandataire : **Esson, Jean-Pierre et al**
**RHONE-POULENC CHIMIE Service Brevets**
**Chimie 25, quai Paul Doumer**
**F-92408 Courbevoie Cedex (FR)**

(54) Catalyseurs pour le traitement des effluents gazeux et procédé de traitement de ces effluents.

(57)    La présente invention concerne des catalyseurs pour le traitement de gaz contenant des composés soufrés.

Ces catalyseurs qui comprennent comme composé essentiel, un élément catalytiquement actif pour la réaction d'oxydation de l'hydrogène sulfuré en anhydride sulfureux ont une forme monolithique. Cette forme permet d'améliorer la sélectivité en anhydride sulfureux de la réaction d'oxydation de l'hydrogène sulfuré.

EP 0 443 905 A1

# CATALYSEURS POUR LE TRAITEMENT DES EFFLUENTS GAZEUX ET PROCEDE DE TRAITEMENT DE CES EFFLUENTS

La présente invention concerne des catalyseurs pour le traitement de gaz, notamment des effluents gazeux industriels, contenant des composés soufrés, en vue de la transformation catalytique de ces composés soufrés en anhydre sulfureux.

Elle concerne plus particulièrement des catalyseurs pour l'oxydation de l'hydrogène sulfuré en anhydride sulfureux.

Certains effluents industriels et en particulier les effluents provenant des unités Claus, appelés également "gaz de queue", contiennent des composés polluants oxydables du soufre et parfois du soufre qui doivent être traités pour être transformés par oxydation en composés qui puissent être aisément éliminés.

Les composés du soufre notamment présents dans ces effluents sont principalement l'hydrogène sulfuré et des composés organiques du soufre tels que le sulfure de carbone, l'oxysulfure de carbone et/ou des mercaptans.

Ces effluents peuvent être traités pour transformer les composés du soufre en anhydride sulfureux ($SO_2$) et en dioxyde de carbone.

Plusieurs procédés d'oxydation de ces composés sont déjà connus. Le plus simple de ces procédés consiste à brûler à hautes températures les effluents.

Pour traiter ces gaz, il a été également proposé des procédés catalytiques d'oxydation des composés soufrés en anhydride sulfureux.

Parmi les catalyseurs proposés, les catalyseurs à base d'oxyde de titane apparaissent très performants. A titre d'exemple, on peut citer le brevet EP 0039266 qui décrit un catalyseur comportant d'une part de l'oxyde de titane ou de la silice ou de l'oxyde de zirconium ou leurs mélanges ou de la silice-magnésie ou des zéolithes, et d'autre part des éléments catalytiquement actifs pris dans les colonnes Ib, IIb, IIIb, Vb, VIb, VIIb, VIII et Va de la classification périodique des éléments, notamment le cuivre, l'argent, le zinc, le cadmium, l'yttrium, les lanthanides, le chrome, le molybdène, le tungstène, le manganèse, le fer, le cobalt, le rhodium, l'iridium, le nickel, le palladium, le platine, l'étain, le bismuth.

Il est également connu de faire appel à d'autres catalyseurs d'oxydation. Ainsi, le brevet US 4 092 404 décrit un catalyseur d'oxydation à base de vanadium déposé sur un support tel que : alumine, silice-alumine, silice-magnésie, oxyde de zirconium, silice-oxyde de zirconium, oxyde de titane, silice-oxyde de titane, silice-oxyde de zirconium-oxyde de titane ou leurs mélanges.

Le brevet EP O 115 449 décrit un catalyseur d'oxydation de l'hydrogène sulfuré qui comprend un support alumine, une phase catalytiquement active choisie parmi les oxydes d'au moins un des métaux suivants : Fe, Cu, Ag, W, Co, Ni, Cr, Cd et au moins un composé choisi parmi les oxydes de terres rares, les oxydes d'alcalino-terreux, l'oxyde de zirconium, la silice.

Les différents catalyseurs précités sont généralement utilisés sous forme de lit constitué par un ensemble de particules disposé dans une colonne, ce lit étant traversé par le flux du gaz à traiter.

Les lits de catalyseur sont constitués, jusqu'à présent, de particules de catalyseur sous forme de granulés cylindriques ou sphériques formés par moulage ou extrusion. Toutefois, de tels catalyseurs ne présentant pas une activité initiale élevée, à faible temps de contact, il est nécessaire de travailler à des temps de contact supérieurs ou égaux à 3 secondes environ. Il s'ensuit une formation d'anhydride sulfurique ($SO_3$), en sortie du lit catalytique.

La présente invention a notamment pour but de remédier à cet inconvénient en proposant la mise en oeuvre pour la réaction d'oxydation de l'hydrogène sulfuré en $SO_2$, un catalyseur de forme monolithique.

La demanderesse a trouvé d'une manière inattendue que le catalyseur de forme monolithique permettait une meilleure sélectivité du catalyseur vis-à-vis de la réaction d'oxydation de l'hydrogène sulfuré en $SO_2$ par rapport à la réaction d'oxydation en $SO_3$.

A cet effet, l'invention propose un catalyseur pour le traitement de gaz contenant des composés soufrés, en particulier, de l'hydrogène sulfuré en vue de l'oxydation de ces composés soufrés en anhydride sulfureux, comprenant comme composant essentiel un élément catalyseur de la réaction d'oxydation de ces composés soufrés, caractérisé en ce que ledit catalyseur a une forme monolithique.

Par forme monolithique, on entend un catalyseur présentant une structure du type alvéolaire ou en nids d'abeilles comprenant un certain nombre d'hexagones, de carrés, de triangles ou d'autres polygones ou cercles ou une forme en onde sinusoïdale, en toile d'araignée ou de spirale. Un tel catalyseur de type alvéolaire comprend des vides ou des pores d'une porosité d'environ 50 à environ 70 %.

Généralement, la forme du catalyseur est une forme cylindrique ou parallélépipédique percée sur toute sa longueur d'orifices parallèles à sa génératrice, permettant ainsi le passage des gaz dans les canaux ou conduits.

Un premier mode de réalisation de l'invention réside dans un catalyseur dit massique, c'est-à-dire que la phase catalytiquement active est extrudée sous forme monolithique.

Une autre variante d'exécution de l'invention consiste en un catalyseur supporté, c'est-à-dire la phase catalytiquement active est déposée sur support monolithique qui est donc un substrat rigide présentant une structure de type alvéolaire.

Le catalyseur de l'invention comprend comme composant essentiel un élément catalytiquement actif choisi dans le groupe comprenant l'oxyde d'aluminium, l'oxyde de titane, l'oxyde de cérium, l'oxyde de zirconium, l'oxyde de fer, l'oxyde de zinc, l'oxyde de chrome, l'oxyde de molybdène, l'oxyde de cobalt, l'oxyde de nickel, l'oxyde de vanadium ou un mélange de ceux-ci.

Une variante préférée du catalyseur de l'invention consiste à mettre en oeuvre au moins un métal précieux du groupe VIII du tableau périodique. A titre d'exemples, on peut citer le palladium, le platine, le rhodium, l'iridium.

Les oxydes d'éléments catalytiquement actifs décrits ci-dessus convenables pour l'invention sont tous les oxydes de ces éléments quel que soit leur mode de préparation ou leur origine.

La proportion pondérale de ou des éléments catalytiquement actifs exprimée en oxydes par rapport au poids total du catalyseur fini peut varier de 0,5 à 100 %, et de préférence de 60 à 99 % environ.

La proportion pondérale d'un ou de plusieurs métaux précieux peut représenter de 0,05 à 1 % environ du poids de catalyseur fini.

Le catalyseur de l'invention peut également comprendre des additifs pour faciliter la mise en forme et des additifs pour améliorer les propriétés mécaniques finales.

On peut faire appel dans la préparation du catalyseur de l'invention, aux additifs utilisés classiquement dans les techniques de mise en forme. Ces additifs confèrent à la pâte obtenue par malaxage les propriétés rhéologiques adaptées à la mise en forme. A titre d'exemple d'additifs de mise en forme, on peut citer notamment : la cellulose, la carboxyméthyl-cellulose, la carboxyéthyl-cellulose, du tall-oil, les gommes xanthane, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylène glycols...

Enfin, la quantité de ces additifs peut varier entre 0,1 et 15 % en poids par rapport au catalyseur fini.

De plus, il est possible de mettre en oeuvre des constituants complémentaires susceptibles d'améliorer les qualités mécaniques des formulations. Ces constituants pourront être choisis dans le groupe comprenant les argiles, les silicates, les sulfates d'alcalino-terreux, les fibres céramiques, l'amiante ou la silice.

Avantageusement, le catalyseur comprend un sulfate d'alcalino-terreux, de préférence de calcium ou un sulfate d'ammonium.

Ces constituants peuvent être utilisés dans des quantités en poids par rapport au catalyseur fini pouvant aller jusqu'à 99,5 %, particulièrement jusqu'à 60 % et plus précisément jusqu'à 30 %.

Le catalyseur dit massique selon l'invention peut être préparé selon tout procédé connu approprié pour obtenir un monolithe massique.

Ce dernier peut être obtenu par mise en forme d'un mélange contenant les constituants du catalyseur.

On effectue un malaxage d'un mélange à base d'eau, de poudre contenant au moins un élément catalytiquement actif et les éventuels additifs du type mentionné ci-dessus.

Le mélange ainsi obtenu est ensuite mis sous forme monolithique selon les procédés classiques de fabrication par extrusion, laminage, solidification d'éléments en forme de feuille, etc...

On peut soumettre le monolithe ainsi obtenu à une opération de séchage à une température comprise, par exemple, entre 100°C et 150°C, pendant une durée très variable de 10 à 20 heures.

Elle peut être suivie éventuellement d'une opération de calcination à une température variant entre environ 350°C et environ 500°C, pendant une durée le plus souvent comprise entre 1 heure et 8 heures.

Les catalyseurs dits massiques de forme monolithique présentent généralement une surface spécifique variant de 5 à 300 $m^2/g$, de préférence entre 50 et 120 $m^2/g$. La surface spécifique exprimée est une surface B.E.T., c'est-à-dire déterminée par adsorption d'azote conformément à la norme ASTM : D 3663-78, établie à partir de la méthode BRUNAUER-EMMETT-TELLER - The Journal of Americain Society, 60, 309 (1938).

Selon un autre mode de réalisation de l'invention, l'élément catalytiquement actif est déposé sur un support monolithique.

Le support monolithique peut être un support à propriétés non basiques tel que l'alumine, la silice, l'oxyde de cérium, l'oxyde de zirconium, l'oxyde de titane, etc...

Il peut être préparé et façonné comme décrit ci-dessus à partir de la poudre d'oxyde ou d'oxyde hydraté et éventuellement d'additifs de mise en forme et constituants supplémentaires, améliorant les qualités mécaniques tels que décrits précédemment.

Conviennent également comme supports monolithiques, les supports monolithiques de type connu, tels que les supports monolithiques réfractaires, par exemple, les monolithes métalliques ou les monolithes en matière céramique.

Les monolithes métalliques utilisés sont notamment ceux obtenus à partir d'alliages de chrome, aluminium et cobalt tels que ceux connus sous la marque KANTHAL ou ceux obtenus à partir d'alliages de fer, de chrome, d'aluminium et d'yttrium et connus sous la marque FECRALLOY. Le métal peut aussi être de l'acier carboné ou de la fonte simple.

Les monolithes en matière céramique utilisés sont notamment ceux comportant comme matière principale : la cordiérite, l'alumine, la mullite, le zirconium, la zirconmullite, le titanate de baryum, la porcelaine, l'oxyde de thorium, l'oxyde de magnésium, la stéatite, les carbures de bore ou de silicium.

Les supports monolithiques tels que précités sont revêtus par une pellicule ou une couche de matière poreuse, avantageusement réfractaire. Cette matière poreuse est, de préférence, une matière macroporeuse.

Comme matière poreuse convenable, on peut citer à titre d'exemples les oxydes réfractaires choisis dans le groupe comprenant les oxydes d'aluminium, magnésium, calcium, strontium, baryum, scandium, yttrium, lanthanides, gallium, silicium, titane, zirconium, hafnium, thorium, niobium, tantale, chrome, molybdène, tungstène.

Le revêtement poreux et son procédé de dépôt conduit d'une manière connue, ne sont pas critiques selon l'invention.

Les différents supports monolithiques tels que précités peuvent être alors ensuite imprégnés de manière à effectuer le dépôt de l'élément catalytiquement actif.

L'imprégnation se fait de manière connue par mise en contact du support avec une solution, un sol, un gel comprenant au moins un élément catalytiquement actif sous forme d'oxyde ou de précurseur d'oxyde.

L'opération est effectuée généralement par trempage du support de structure monolithique dans un volume déterminé de solution d'au moins un précurseur d'un élément catalytiquement actif.

Par solution d'un précurseur d'un élément catalytiquement actif, on entend une solution d'un sel ou composé de l'élément ou d'au moins un des éléments constituant la phase catalytique, ces sels et composés étant thermiquement décomposables.

La concentration en sel de la solution est choisie en fonction de la quantité de phase active à déposer sur le support monolithique.

La surface d'imprégnation de la phase active est déterminée par le volume de solution adsorbé. Ainsi, selon une caractéristique de l'invention, le volume adsorbé de la phase catalytique est égal au volume poreux total du support monolithique à imprégner. Pour la détermination du volume poreux, on peut le faire selon la méthode connue au porosimètre à mercure ou bien mesurer sur un échantillon, la quantité d'eau qu'il absorbe. Il est également possible d'imprégner le support par trempage de celui dans la solution de précurseur(s) d'élément(s) catalytiquement actif(s) et d'éliminer l'excès de solution par égouttage.

Le support monolithique peut être alors soumis à une opération de séchage et éventuellement de calcination dans les conditions mentionnées précédemment.

Il est également possible de répéter ces opérations avec le même support après l'avoir séché et calciné et de déposer successivement plusieurs éléments sur le support et sur des surfaces déterminées, qui peuvent varier.

Le support monolithique est donc recouvert d'une couche d'une phase catalytiquement active dont l'épaisseur peut varier entre 2 $\mu$m et 500 $\mu$m et qui représente de 0, 5 à 95 % du poids du support monolithique et fournit une surface spécifique généralement comprise entre 50 et 120 $m^2$/g.

Conformément à l'invention, le procédé d'oxydation de l'hydrogène sulfuré et des composés soufrés consiste à mettre en contact ledit effluent gazeux et un gaz renfermant de l'oxygène, en présence du catalyseur de forme monolithique.

On peut, selon le procédé de l'invention, mettre en oeuvre un effluent gazeux gui peut avoir des origines diverses. En particulier, il peut être constitué par un gaz naturel, un gaz provenant de la gazéification du charbon ou des huiles lourdes, ou encore un gaz obtenu par hydrogénation des composés soufrés d'un effluent d'usine à soufre.

L'effluent gazeux contenant les composés soufrés présente une composition qui peut varier tant dans la nature de ses constituants que par leurs proportions. C'est ainsi qu'il contient de l'hydrogène sulfuré, mais éventuellement d'autres composés organiques du soufre tels que le sulfure de carbone ($CS_2$) et/ou l'oxysulfure de carbone (COS) et/ou des mercaptans.

L'effluent gazeux à traiter présente une composition variable dans de larges limites. Généralement, l'effluent contient moins de 0,5 % en volume d'hydrogène sulfuré et, de préférence, de 0,02 à 0,5 % en volume et encore plus préférentiellement, de 0,05 à 0,2 % en volume. Il peut comprendre également du $CS_2$ et/ou du COS dont la concentration globale est d'au plus 0,2 % en volume, de préférence d'au plus 0,1 %.

Pour ce qui est du gaz utilisé pour l'oxydation de l'hydrogène sulfuré, c'est généralement de l'air, éventuellement de l'air enrichi en oxygène, de l'oxygène pur ou des mélanges en proportions variées d'oxygène et d'un gaz inerte, par exemple, l'azote.

La quantité de gaz est telle que la quantité d'oxygène soit au moins égale et de préférence supérieure à la quantité stoechiométrique nécessaire pour l'oxydation en anhydride sulfureux de la totalité des composés soufrés. Avantageusement, la quantité d'oxygène présente dans le gaz représente un excès d'environ 15 à 100 % par rapport à la stoechiométrie.

Le procédé de l'invention est mis en oeuvre à des températures supérieures à 250°C et de préférence à des températures comprises entre 300°C et 550°C.

Le temps de contact du flux gazeux avec le catalyseur de l'invention est déterminé de telle sorte que l'on obtienne le taux de conversion souhaité.

Conformément au procédé de l'invention, le temps de contact est faible, de préférence entre 0,5 et 2,5 secondes, ce qui correspond à une vitesse spatiale élevée. La VVH qui représente le volume de gaz traité par volume de catalyseur et par heure est de préférence supérieure à 1500 $h^{-1}$, et encore plus préférentiellement comprise entre 2000 et 10 000 $h^{-1}$.

L'effluent gazeux contenant les composés soufrés et le gaz renfermant de l'oxygène libre peuvent être amenés séparément au contact du catalyseur. Toutefois, en vue d'obtenir un milieu réactionnel gazeux très homogène, il est préférable de mélanger tout d'abord ledit effluent avec le gaz renfermant de l'oxygène libre et d'amener le mélange ainsi réalisé au contact du catalyseur de l'invention.

Le mélange obtenu dénommé par la suite "flux gazeux" présente une composition très variable et l'on précisera, à titre d'exemples, les proportions des différents constituants, dans un mode de réalisation préférentiel de l'invention :

- hydrogène sulfuré = 0,05 à 0,2 %
- oxygène = 0,03 à 0,2 %
- eau = 3 à 30 %
- azote = quantité suffisante à 100 %

Un mode de mise en oeuvre préférentielle du procédé de l'invention consiste à mettre en contact un effluent gazeux ayant une teneur en $H_2S$ potentiel inférieure à 1 % ($H_2S$ libre + $H_2S$ provenant de $CS_2$ et COS) et un gaz contenant de l'oxygène : le rapport molaire $O_2/H_2S$ étant compris entre 2,0 et 10,0 et, de préférence, entre 2,3 à 4,0 avec un catalyseur de forme monolithique. On choisit, à titre préférentiel, un catalyseur sous forme monolithique d'oxyde de titane.

Le procédé de l'invention permet d'obtenir un flux contenant très peu de $SO_3$, de préférence moins de 50 PPM.

Le catalyseur sous forme monolithique permet donc une meilleure sélectivité vis-à-vis de la réaction d'oxydation d'hydrogène sulfuré en $SO_2$ par rapport à la réaction d'oxydation qui conduit à la formation de $SO_3$.

On donne, ci-après un exemple de mise en oeuvre de l'invention (exemple 2) et un exemple donné à titre comparatif (exemple 1).

Exemple comparatif 1 :

On ajoute à une suspension d'oxyde de titane obtenue après hydrolyse et filtration dans le procédé classique d'attaque sulfurique de l'ilménite, une suspension de chaux pour neutraliser la totalité des sulfates. La suspension est séchée à 150°C pendant 1 heure. La poudre obtenue est malaxée en présence d'eau et d'acide nitrique dans les proportions suivantes :

- poudre $TiO_2$ : 58 %
- $HNO_3$ : 2 %
- $H_2O$ : 40 %

La pâte ainsi obtenue est extrudée au travers d'une filière cylindrique ayant 4 mm de diamètre pour obtenir des extrudés ayant une forme cylindrique.

Les extrudés sont séchés 15 heures à 120°C puis calcinés 2 heures à 450°C.

Les extrudés sont imprégnés par une solution contenant 28,94 g de nitrate de fer et 0,66 g d'acide hexachloroplatinique, à raison de 35 $cm^3$ de solution pour 100 g d'extrudés.

Après imprégnation, les extrudés sont soumis à une opération de séchage, 15 heures à 120°C et de calcination, 2 heures à 450°C.

On obtient des extrudés contenant 4 % en poids de fer et 0,25 % en poids de platine.

Les extrudés obtenus ont les caractéristiques suivantes :

- diamètre des extrudés : 3,5 mm
- surface spécifique : 120 $m^2/g$
- volume poreux total : 0,35 $cm^3/g$

Exemple 2

La pâte obtenue dans l'exemple 1 est extrudée au travers d'une filière de section carrée de 20 mm de côté et comportant 169 petits carrés de 1,4 mm de côté.

Les monolithes sont ensuite séchés à 120°C pendant 15 heures puis calcinés 2 heures à 450°C.

Les monolithes sont ensuite imprégnés comme dans l'exemple 1 par une solution contenant 28,94 g de nitrate de fer et 0,66 g d'acide hexachloroplatinique, à raison de 35 cm³ de solution pour 100 g de monolithes.

Après séchage et calcination réalisés comme dans l'exemple 1, on obtient un catalyseur ayant les caractéristiques suivantes :

– monolithes de section carrée de 20 mm de côté
– surface spécifique : 110 m²/g
– volume poreux total : 0,30 cm³/g

Tests catalytiques

Le test catalytique a pour but de comparer les activités des catalyseurs des exemples 1 et 2 en oxydation de l'hydrogène sulfuré, en $SO_2$ et $SO_3$.

On introduit dans un réacteur un gaz ayant la composition suivante en volume.

$SO_2$ :      400 ppm
$H_2S$ :      800 ppm
$O_2$ :      2 %
$H_2O$ :      30 %
$N_2$ :      balance

En fonctionnement isotherme, à une température de 350°C et pour un volume identique de réacteur rempli de catalyseur, la vitesse volumique des gaz est égale à 1800 h$^{-1}$ calculée dans les conditions normales de température et de pression.

Le temps de contact des gaz est de 2 secondes.

Les gaz de sortie sont analysés pour l'$H_2S$ et pour le $SO_2$ par chromatographie en phase gazeuse.

On effectue l'analyse du $SO_3$ par piégeage sur de la laine de verre et dosage chimique de la solution sulfurique obtenue par lavage de la laine.

On compare l'activité des catalyseurs en mesurant le taux de transformation de l'hydrogène sulfuré et on détermine le pourcentage de $SO_3$ formé.

Les résultats obtenus sont consignés dans le tableau I suivant :

Tableau I

| | Type de catalyseur | Concentration finale | | |
| --- | --- | --- | --- | --- |
| | | $H_2S$ | $SO_2$ | $SO_3$ |
| Exemple 1 comparatif | extrudés de $TiO_2$ | 0 | 750 PPM | 450 PPM |
| Exemple 2 | monolithes de $TiO_2$ | 0 | 1170 PPM | < 30 PPM |

L'examen des résultats reportés dans le Tableau I met bien en évidence la supériorité du catalyseur de l'invention par rapport au catalyseur de l'art antérieur pour sa sélectivité en $SO_2$.

**Revendications**

**1-** Catalyseur pour le traitement des gaz contenant des composés soufrés en vue de l'oxydation de ces composés en anhydride sulfureux, comprenant comme composant essentiel un élément catalyseur de la réaction d'oxydation de ces composés soufrés, caractérisé en ce que ledit catalyseur a une forme monolithique.

**2-** Catalyseur selon la revendication 1 caractérisé par le fait qu'il présente une structure de type alvéolaire ou en nids d'abeille permettant le passage des gaz dans les canaux ou conduits.

**3-** Catalyseur selon l'une des revendications 1 et 2 caractérisé par le fait qu'il comprend des vides ou des pores d'une porosité d'environ 50 à 70 %.

**4-** Catalyseur selon l'une des revendications 1 à 3 caractérisé par le fait qu'il est sous forme massique : la phase catalytiquement active étant extrudée sous forme monolithique.

**5-** Catalyseur selon l'une des revendications 1 à 3 caractérisé par le fait qu'il est sous forme supportée : la phase catalytiquement active étant déposée sur un support de forme monolithique.

**6-** Catalyseur selon la revendication 5 caractérisé par le fait que le support de forme monolithique est choisi dans le groupe comprenant l'alumine, la silice, l'oxyde de cérium, l'oxyde de zirconium, l'oxyde de titane.

**7-** Catalyseur selon la revendication 5 caractérisé par le fait que le support de forme monolithique est un monolithe métallique ou un monolithe en céramique revêtu par une pellicule ou une couche de matière poreuse.

**8-** Catalyseur selon l'une des revendications 1 à 7 caractérisé par le fait que l'élément catalytiquement actif est un oxyde des éléments choisis dans le groupe comprenant le titane, le cérium, le zirconium, l'aluminium, le fer, le zinc, le chrome, le molybdène, le cobalt, le nickel, le vanadium.

**9-** Catalyseur selon l'une des revendications 1 à 8 caractérisé par le fait qu'il contient de 0,5 à 100 % en poids d'élément(s) catalytiquement actif(s), de préférence de 60 à 99 %.

**10-** Catalyseur selon l'une des revendications 1 à 9 caractérisé par le fait qu'il comprend un sulfate d'alcalino-terreux ou un sulfate d'ammonium.

**11-** Catalyseur selon l'une des revendications 1 à 10 caractérisé par le fait qu'il comprend au moins un métal précieux du groupe VIII.

**12-** Catalyseur selon la revendication 1 caractérisé par le fait qu'il est constitué par un monolithe à base d'oxyde de titane.

**13-** Procédé d'oxydation en anhydride sulfureux de l'hydrogène sulfuré et des composés soufrés caractérisé par le fait qu'il consiste à mettre en contact un effluent gazeux contenant les composés soufrés et un gaz renfermant de l'oxygène en présence du catalyseur selon l'une des revendications 1 à 12.

**14-** Procédé selon la revendication 13 caractérisé par le fait que l'effluent gazeux comprend moins de 0,5 % en volume d'hydrogène sulfuré, de préférence de 0,02 à 0,5 % et, plus préférentiellement, de 0,05 à 0,2 %.

**15-** Procédé selon l'une des revendications 13 et 14 caractérisé par le fait que la température réactionnelle est comprise entre 300°C et 550°C.

**16-** Procédé selon l'une des revendications 13 à 15 caractérisé par le fait que le temps de contact est compris entre 0,5 et 2,5 secondes.

**17-** Procédé selon l'une des revendications 13 à 16 caractérisé par le fait que la vitesse spatiale est supérieure à $1500 \ h^{-1}$ .

**18-** Procédé selon l'une des revendications 13 à 17 caractérisé par le fait que la vitesse spatiale est comprise entre 2000 et $10\ 000 \ h^{-1}$.

Office européen
des brevets

**RAPPORT DE RECHERCHE EUROPEENNE**

Numero de la demande

EP 91 40 0330

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 209 625 (W.R. GRACE & CO.) * Exemples; revendications 1-24 * | 1-3,5-9 ,12-18 | B 01 D 53/36 C 01 B 17/50 |
| X | US-A-4 382 912 (A.M. MADGAVKAR et al.) * Exemple * | 1,2,5-9 | |
| A | * Exemple * | 13-18 | |
| X | GB-A-2 208 482 (THE SECRETARY OF STATE FOR TRADE AND INDUSTRY) * Revendications 1-8 * | 1,2,5-7 ,11,13 | |
| A | * Revendications 1-8 * | 14-18 | |
| X | WO-A-8 302 605 (GRACE) * Revendication 1 * | 1,13 | |
| X | EP-A-0 272 979 (RHONE-POULENC) * Revendications 1-19 * | 1,4-9 | |
| X | EP-A-0 244 301 (RHONE-POULENC) * Revendications 1-14 * | 1,2,4-9 | |
| A,D | EP-A-0 039 266 (RHONE-POULENC) * Revendications 1-11 * | 6,8,11, 15,17, 18 | DOMAINES TECHNIQUES RECHERCHES (Int. Cl.5) B 01 D C 01 B |
| A,D | US-A-4 092 404 (R.E. HASS) * Revendications 1-17 * | 6,8,14, 15 | |

Le présent rapport a été établi pour toutes les revendications

| Lieu de la recherche | Date d'achèvement de la recherche | Examinateur |
|---|---|---|
| LA HAYE | 02-05-1991 | KANOLDT W.W. |

EPO FORM 1503 03.82 (P0402)